# EUROPEAN PATENT APPLICATION

(11) **EP 2 624 246 A1**
(43) Date of publication of application: **07.08.2013**
(21) Application number: 13153173.3
(22) Date of filing: 30.01.2013
(51) Int. Cl.: G09G 3/32, G09G 3/20

(54) **Display apparatus and display method thereof**

(30) Priority: 31.01.2012 KR 20120010087
(71) Applicant: Samsung Electronics Co., Ltd., Gyeonggi-do 443-742 (KR)
(72) Inventor: Kang, Ho-woong, Yongin-si (KR)
(74) Representative: Waddington, Richard

(57) **Abstract**

A display apparatus is provided. The display apparatus includes a display unit for comprising a plurality of pixels and displaying an image frame by illuminating the pixels on a pixel basis; a motion measuring unit for measuring motion per pixel of each image frame by comparing a plurality of image frames to be displayed in the display unit; and a control unit for adjusting a light emission intensity and a light emission time per pixel of the display unit according to a magnitude of the measured motion.

## Description

### CROSS-REFERENCE TO RELATED APPLICATIONS

This application claims the benefit under 35 U.S.C. § 119 (a) from Korean Patent Application No. 10-2012-0010087 filed on January 31, 2012 in the Korean Intellectual Property Office, the entire disclosure of which is incorporated herein by reference.

### BACKGROUND OF THE INVENTION

### Field of the Invention

The present general inventive concept generally relates to a display apparatus and a display method thereof. More particularly, the present general inventive concept relates to a display apparatus for driving on a pixel basis, and a display method thereof.

### Description of the Related Art

Compared to CRT display devices, LCD display devices are subject to severe motion blurring of video. Since the CRT type has a blanking time between frames but the LCD type does not, the moving image is blurred visually according to ghost effect.

Meanwhile, OLED display devices produce light as much as each pixel represents the image on the frame basis throughout the whole pixel, and represent the gray scale according to currents flowing through a diode of each pixel. Hence, to represent one frame, the whole pixel consumes the current as much as the emission during the one frame.

Similar to the LCD type, the OLED type also suffers from the motion blur. It is necessary to address the motion blur according to the characteristics of the OLED.

### SUMMARY OF THE INVENTION

An aspect of the present general inventive concept has been provided to solve the above-mentioned and/or other problems and disadvantages and an aspect of the present general inventive concept provides a display apparatus for reducing motion blur without luminance change, and a display method thereof

According to the present invention there is provided an apparatus and method as set forth in the appended claims. Other features of the invention will be apparent from the dependent claims, and the description which follows.

According to an aspect of the present general inventive concept, a display apparatus includes a display unit for comprising a plurality of pixels and displaying an image frame by illuminating the pixels on a pixel basis; a motion measuring unit for measuring motion per pixel of each image frame by comparing a plurality of image frames to be displayed in the display unit; and a control unit for adjusting a light emission intensity and a light emission time per pixel of the display unit according to a magnitude of the measured motion.

The control unit may divide the plurality of the pixels to a plurality of groups based on the measured motion magnitude, adjust the light emission intensity of the pixel of each group using a weight proportional to a motion magnitude of the corresponding group, and control the display unit to illuminate during the light emission time inversely proportional to the motion magnitude of the corresponding group.

The display unit may generate and sequentially display first, second, and third fields for each image frame. The control unit may divide the plurality of the pixels to a maximum motion group, an intermediate motion group, and a minimum motion group based on the motion magnitude, increase the light emission intensity of the pixel corresponding to the maximum motion group in the first field by applying a maximum weight and adjusts to zero in the second and third fields, increase the light emission intensity of the pixel corresponding to the intermediate motion group in the first and second fields by applying an intermediate weight and adjusts to zero in the third field, and maintain an original light emission intensity of the pixel corresponding to the minimum motion group in the first, second, and third fields.

The control unit may divide the motion magnitude into a plurality of levels based on at least one threshold, and divide a display section of each image frame of the display unit to a plurality of fields as many as the levels. The control unit adjust the light emission intensity of the pixels of the motion magnitude corresponding to each level using the weight corresponding to the motion magnitude of each level, and adjust the light emission time of the pixels of the motion magnitude corresponding to each level using the number of the fields corresponding to the motion magnitude of each level.

The control unit may divide the plurality of the pixels to a maximum motion group, an intermediate motion group, and a minimum motion group based on the motion magnitude, divides a display section of each image frame of the display unit to first, second and third fields, adjust the light emission intensity of the pixel corresponding to the maximum motion group by applying a maximum weight and adjusts the light emission time to illuminate during the first field, adjust the light emission intensity of the pixel corresponding to the intermediate motion group by applying an intermediate weight and adjusts the light emission time to illuminate during the first and second fields, and adjust the light emission time of the pixel corresponding to the minimum motion group to illuminate during the first, second, and third fields without adjusting the light emission intensity.

A display method includes measuring motion per pixel of each image frame by comparing a plurality of image frames to be displayed in a display unit which comprises a plurality of pixels and displays an image frame by illuminating the pixels on a pixel basis; and adjusting a light emission intensity and a light emission time per pixel of the display unit according to a magnitude of the measured motion.

The operation for adjusting the light emission intensity and the light emission time per pixel of the display unit may divide the plurality of the pixels to a plurality of groups based on the measured motion magnitude, adjust the light emission intensity of the pixel of each group using a weight proportional to a motion magnitude of the corresponding group, and produce light during the light emission time inversely proportional to the motion magnitude of the corresponding group.

The display unit may generate and sequentially display first, second, and third fields for each image frame. The operation for adjusting the light emission intensity and the light emission time per pixel of the display unit may divide the plurality of the pixels to a maximum motion group, an intermediate motion group, and a minimum motion group based on the motion magnitude, increase the light emission intensity of the pixel corresponding to the maximum motion group in the first field by applying a maximum weight and adjusts to zero in the second and third fields, increase the light emission intensity of the pixel corresponding to the intermediate motion group in the first and second fields by applying an intermediate weight and adjusts to zero in the third field, and maintain an original light emission intensity of the pixel corresponding to the minimum motion group in the first, second, and third fields.

The operation for adjusting the light emission intensity and the light emission time per pixel of the display unit may divide the motion magnitude into a plurality of levels based on at least one threshold, divides a display section of each image frame of the display unit to a plurality of fields as many as the levels, adjust the light emission intensity of the pixels of the motion magnitude corresponding to each level using the weight corresponding to the motion magnitude of each level, and adjust the light emission time of the pixels of the motion magnitude corresponding to each level using the fields corresponding to the motion magnitude of each level.

The operation for adjusting the light emission intensity and the light emission time per pixel of the display unit may divide the plurality of the pixels to a maximum motion group, an intermediate motion group, and a minimum motion group based on the motion magnitude, divides a display section of each image frame of the display unit to first, second and third fields, adjust the light emission intensity of the pixel corresponding to the maximum motion group by applying a maximum weight and adjusts the light emission time to illuminate during the first field, adjust the light emission intensity of the pixel corresponding to the intermediate motion group by applying an intermediate weight and adjusts the light emission time to illuminate during the first and second fields, and adjust the light emission time of the pixel corresponding to the minimum motion group to illuminate during the first, second, and third fields without adjusting the light emission intensity.

### BRIEF DESCRIPTION OF THE DRAWING FIGURES

These and/or other aspects and advantages of the present general inventive concept will become apparent and more readily appreciated from the following description of the embodiments, taken in conjunction with the accompanying drawings of which:

FIGS. 1A and 1B are diagrams of a principle of the present general inventive concept;

FIGS. 2A and 2B are diagrams of a display apparatus according to an exemplary embodiment of the present general inventive concept;

FIG. 3 is a block diagram of the display apparatus according to an exemplary embodiment of the present general inventive concept;

FIGS. 4A, 4B and 4C tare diagrams of a display method according to an exemplary embodiment of the present general inventive concept; and

FIG. 5 is a flowchart of the display method according to an exemplary embodiment of the present general inventive concept.

### DETAILED DESCRIPTION OF THE EXEMPLARY EMBODIMENTS

Reference will now be made in detail to the embodiments of the present general inventive concept, examples of which are illustrated in the accompanying drawings, wherein like reference numerals refer to the like elements throughout. The embodiments are described below to explain the present general inventive concept by referring to the figures.

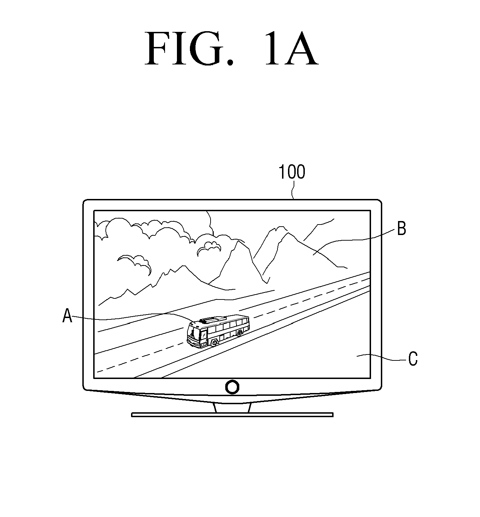

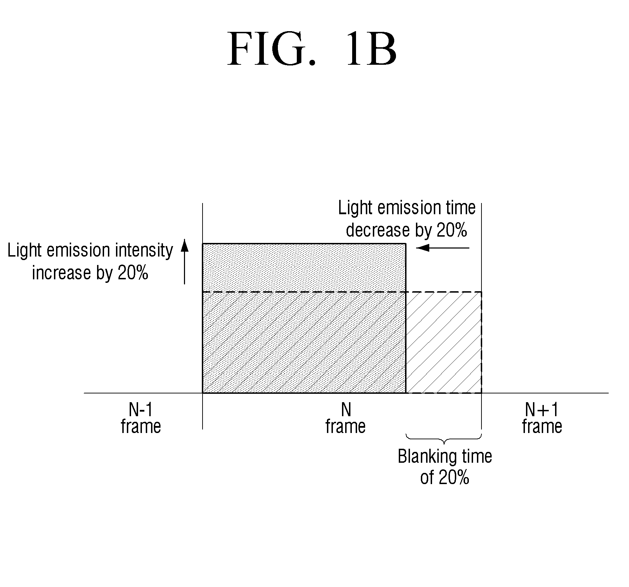

FIGS. 1A and 1B are diagrams of a principle of the present general inventive concept.

As shown in FIG. 1A, in an image displayed in a display apparatus 100, a region A includes the greatest motion, a region B includes the intermediate motion, and a region C includes little motion.

In this case, pixels corresponding to the region A of the great motion continuously change their light amount on the frame basis, whereas pixels corresponding to the region C of little motion keep their light amount during a great number of frames.

Meanwhile, even an OLED display apparatus with a fast response time is subject to visual motion blurring. This results from vision reaction characteristics of the human, and afterimages are recognized by retinas to cause the motion blur. In particular, the region A of the considerable motion has severe blurring.

Thus, the present general inventive concept provides a method for reducing the blurring using the principle of FIG. 1B.

As shown in FIG. 1B, when an N frame image of a particular pixel increases the emission intensity of the pixel by 20% and decreases the emission time by 20%, the brightness of the whole region can be maintained and the blanking time of 20% can be attained in the vertical cycle of the frame. That is, since the OLED itself emits the light on the pixel basis, the motion is detected by analyzing the image. When detecting much motion, the regions of the different motion levels can be differently driven by proportionally applying the driving time and the current of each pixel and thus only the necessary region can be operated in a blanking interval.

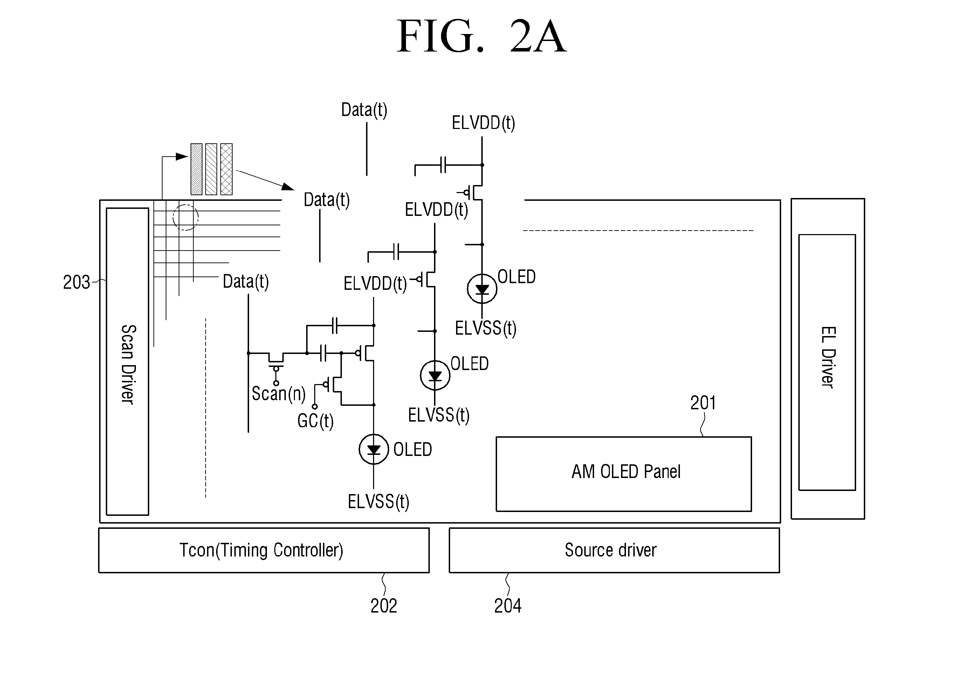

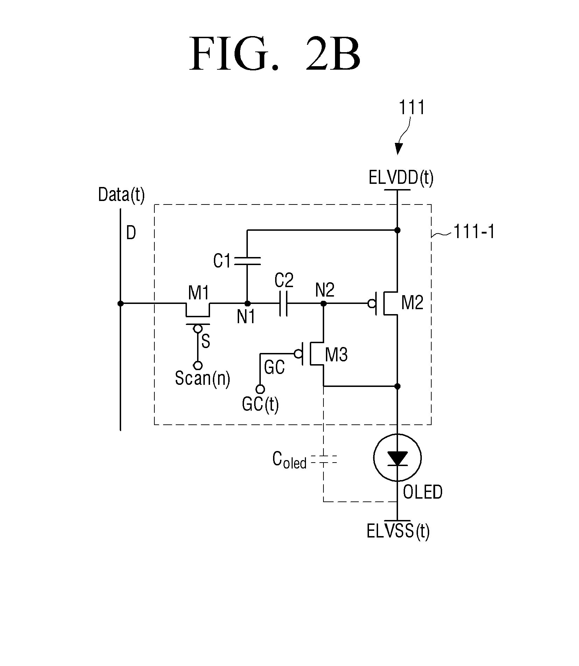

FIGS. 2A and 2B depict a display apparatus according to an exemplary embodiment of the present general inventive concept.

FIG. 2A is a simplified diagram of a circuit of the display apparatus according to an exemplary embodiment of the present general inventive concept.

The display apparatus of FIG. 2A can be implemented using an Active Matrix Organic Light-Emitting Diode (AM-OLED). Herein, the OLED itself produces the light using electroluminescence when the current flows through a fluorescent or phosphorescent layer. While a Passive Matrix (PM) OLED emits the light with one line all together, the AM-OLED individually drives the light emitting elements.

As shown in FIG. 2A, an AM-OLED panel can include RGB pixels including a TFT element and an organic EL element. Herein, the TFT is driven through a timing controller, a scan driver, and a source driver, and writes image information to display.

Active matrix is drive by the TFT of the pixel, and Vth is compensated and Data is written through an external switch. In the actual light emission, the external switch is connected to the power source to thus supply the necessary energy for the light emission.

FIG. 2B depicts the circuit of the pixel according to an exemplary embodiment of the present general inventive concept.

Referring to FIG. 2B, the pixel 111 according to an exemplary embodiment of the present general inventive concept includes an OLED and a pixel circuit 111-1 for supplying the current to the OLED.

An anode electrode of the OLED is connected to the pixel circuit 111-1 and a cathode electrode is connected to a second power source ELVSS. Such an OLED produces the light with a certain luminance in response to the current supplied from the pixel circuit 111-1.

The pixel circuit 111-1 of each pixel 111 can include three transistors M1, M2 and M3 and two capacitors C1 and C2 as shown in FIG. 2B.

Herein, a gate electrode of the first transistor M1 is connected to a scan line S, and a first electrode is connected to a data line D. A second electrode of the first transistor M1 is connected to a first node N1.

That is, a scan signal Scan(n) is input to the gate electrode of the first transistor M1, and a data signal Data(t) is input to the first electrode.

A gate electrode of the second transistor M2 is connected to a second node N2, a first electrode is connected to a first power source ELVDD(t), and a second electrode is connected to the anode electrode of the OLED. Herein, the second transistor M2 serves as a driving transistor.

The first capacitor C1 is connected between the first node N1 and the first node of the second transistor M2, that is, the first power source ELVDD(t), and the second capacitor C2 is connected between the first node N1 and the second node N2.

A control line GC is connected to a gate electrode of the third transistor M3, the first electrode is connected to the gate electrode of the second transistor M2, and the second electrode is connected to the anode electrode of the OLED, that is, to the second electrode of the second transistor M2. Thus, a control signal GC(t) is input to the gate electrode of the third transistor M3. When the third transistor is turned on, the second transistor M2 is diode-connected. The cathode electrode of the OLED is connected to a second power source ELVSS(t).

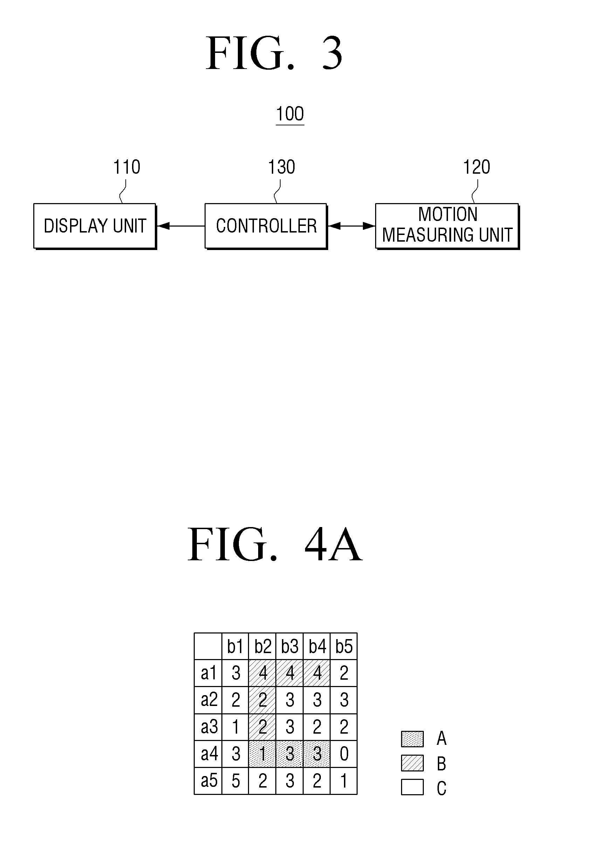

FIG. 3 is a block diagram of the display apparatus according to an exemplary embodiment of the present general inventive concept.

Referring to FIG. 3, the display apparatus 100 includes a display unit 110, a motion measuring unit 120, and a control unit 130.

The display unit 110 includes a plurality of pixels, and displays an image frame by illuminating the pixels on the pixel basis. In detail, the display unit 110 can be implemented using the OLED panel, which has been explained above and shall not be further described.

The motion measuring unit 120 measures the motion per pixel in each frame by comparing a plurality of image frames to be displayed in the display unit 110.

The control unit 130 controls a light emission intensity and a light emission time per pixel of the display unit 110 according to the motion magnitude measured by the motion measuring unit 120.

More specifically, the control unit 130 can divide the pixels to a plurality of groups base on the motion magnitude measured by the motion measuring unit 120, adjust the light emission intensity of the pixels of each group using a weight proportional to the motion magnitude of the corresponding group, and control the display unit 110 to produce the light during the light emission time inversely proportional to the motion magnitude of the corresponding group.

The control unit 130 can divide at least one image frame into a plurality of fields according to the motion magnitude measured by the motion measuring unit 120, and adjust the light emission intensity of the pixels by differently weighting the plurality of the fields.

In this case, the control unit 130 can divide the motion magnitude into a plurality of levels based on at least one threshold, and divide the display section of each image frame of the display unit 110 to a plurality of fields as many as the levels.

More specifically, the control unit 130 can adjust the light emission intensity of the pixels of the motion magnitude corresponding to each level using the weight corresponding to the motion magnitude of each level, and adjust the light emission time of the pixels of the motion magnitude corresponding to each level using the number of the fields corresponding to the motion magnitude of each level.

In this case, pixel data per field can be generated and driven individually, or pixel data and duration data of one field can be generated and driven.

Hereafter, it is assumed that the control unit 130 divides each image frame into three fields according to the motion measured by the motion measuring unit 120. Notably, the number of the fields is not limited three, and one skilled in the related art shall understand that various numbers of the fields can be divided based on the measured motion.

### Generation and driving of pixel data per field

The display unit 130 can generate and sequentially display first, second, and third fields for each image frame, and the control unit 130 can divide the pixels to a maximum motion group, an intermediate motion group, and a minimum motion group based on the measured motion magnitude.

The control unit 130 can increase the light emission intensity of the pixels corresponding to the maximum motion group by applying a maximum weight within the first field, and make it zero in the second and third fields.

The control unit 130 can increase the light emission intensity of the pixels corresponding to the intermediate motion group by applying an intermediate weight within the first and second fields, and make it zero in the third field.

The control unit 130 can maintain the original light emission intensity of the pixels corresponding to the minimum motion group during the first, second and third fields.
Generation and driving of pixel data and light emission time data of one field

The control unit 130 can divide the plurality of the pixels to a maximum motion group, an intermediate motion group, and a minimum motion group based on the measured motion magnitude, and divide the display section of ea ch image frame of the display unit 110 to first, second and third fields.

The control unit 130 can adjust the light emission intensity by applying a maximum weight to the pixels corresponding to the maximum motion group, and adjust the light emission time to illuminate during the first field.

The control unit 130 can adjust the light emission intensity by applying an intermediate weight to the pixels corresponding to the intermediate motion group, and adjust the light emission time to illuminate during the first and second fields.

The control unit 130 does not adjust the light emission intensity of the pixels corresponding to the minimum motion group, and adjusts the light emission time to illuminate during the first, second, and third fields.

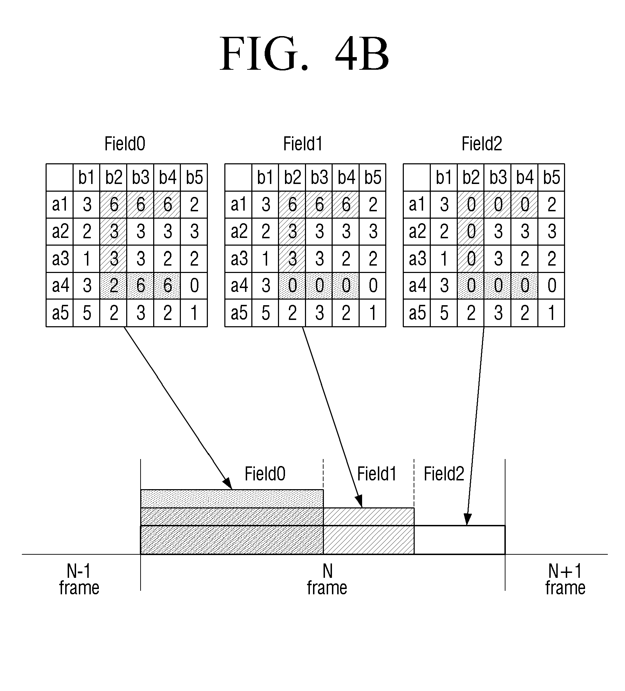

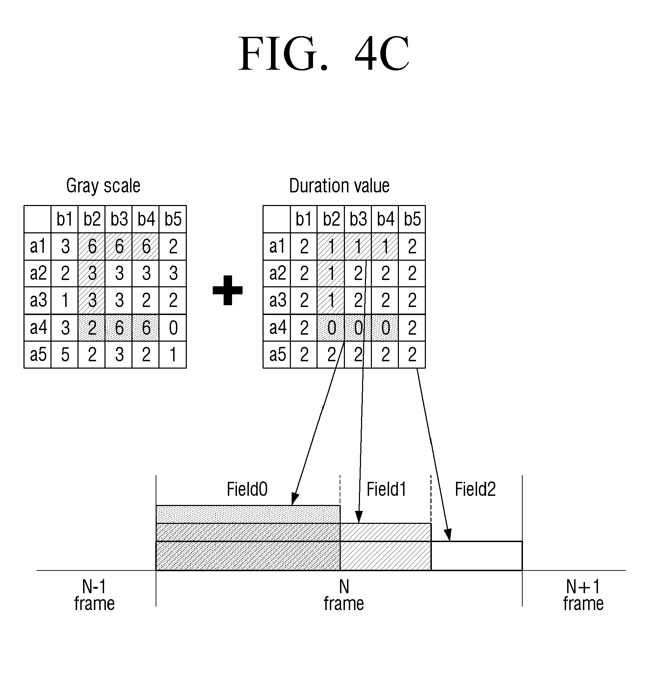

FIGS. 4A, 4B and 4C are diagrams of a display method according to an exemplary embodiment of the present general inventive concept. To ease the understanding, one frame includes 5*5 pixels by way of example.

FIG. 4A depicts a motion measurement result of the N-th frame image according to an exemplary embodiment of the present general inventive concept.

According to the motion measurement result of the N-th image frame as shown in FIG. 4A, it is assumed that a region A is the maximum motion group of much motion, a region B is the intermediate motion group of the intermediate motion, a region C is the minimum motion group of minimum motion, and the number written in the pixel indicates the luminance value of the pixel.

FIG. 4B depicts the frame driving method according to an exemplary embodiment of the present general inventive concept.

When the pixels of the N-th frame are divided into three groups based on the motion magnitude as shown in FIG. 4A, the N-th frame can be driven sequentially by dividing into three fields including first field 0, the second field 1, and the third field 2 as many as the groups as shown in FIG. 4B.

The light emission intensity of the pixels corresponding to the maximum motion group A is increased by applying the maximum weight of 2, the light emission intensity of the pixels corresponding to the intermediate motion group B is increased by applying the intermediate weight of 1.5, and the light emission intensity of the pixels corresponding to the minimum motion group C can maintain the original light emission intensity.

Hence, the light emission intensity of the maximum motion group A is increased from the original light emission intensity (1, 3, 3) to the light emission intensity (2, 6, 6) by applying the maximum weight of 2, the light emission intensity of the intermediate motion group B is increased from the original light emission intensity (2, 2, 4, 4, 4) to the light emission intensity (3, 3, 6, 6, 6) by applying the intermediate weight of 1.5, and the light emission intensity of the minimum motion group C maintains the original light emission intensity (3, 2, 1,3,5,2,3,2,1).

Meanwhile, the maximum motion group A drives with the light emission intensity (2, 6, 6) increased from the original light emission intensity (1, 3, 3) by applying the maximum weight of 2 in the first field, and does not produce the light in the second and third fields.

The intermediate motion group B drives with the light emission intensity (3, 3, 6, 6, 6) increased from the original light emission intensity (2, 2, 4, 4, 4) by applying the intermediate weight of 1.5 in the first field 0 and the second field 1, and does not produce the light in the third field.

The minimum motion group C maintains the original light emission intensity during the first field 0, the second field 1, and the third field 2.

Hence, since the maximum motion group A and the intermediate motion group B have the blanking interval corresponding to the motion magnitude, the blurring can be minimized. For example, the maximum motion group A inclu des the second field 1 and the third field 2 as the blanking intervals, and the intermediate motion group B includes the third field 2 as the blanking interval.

FIG. 4C depicts the frame driving method according to another exemplary embodiment of the present general inventive concept.

Referring to FIG. 4C, the pixels corresponding to the maximum motion group A can adjust the light emission intensity by applying the maximum weight of 2 and adjust the light emission time to illuminate during the first field 0. That is, the light emission intensity is set to (2, 6, 6) and the duration value is set to zero to thus illuminate only during the first field 0.

The pixels corresponding to the intermediate motion group B can adjust the light emission intensity by applying the intermediate weight of 1.5 and adjust the light emission time to illuminate during the first field 0 and the second field 1. That is, the light emission intensity is set to (3, 3, 6, 6, 6) and the duration value is set to 1 to thus illuminate during the first field 0 and the second field 1.

Meanwhile, the pixel corresponding to the minimum motion group C can adjust the light emission time to illuminate during the first field 0, the second field 1, and the third field 2 without adjusting the light emission intensity. That is, the light emission intensity is set to the original intensity and the duration value is set to 2 to thus illuminate during the first field 0, the second field 1, and the third field 2.

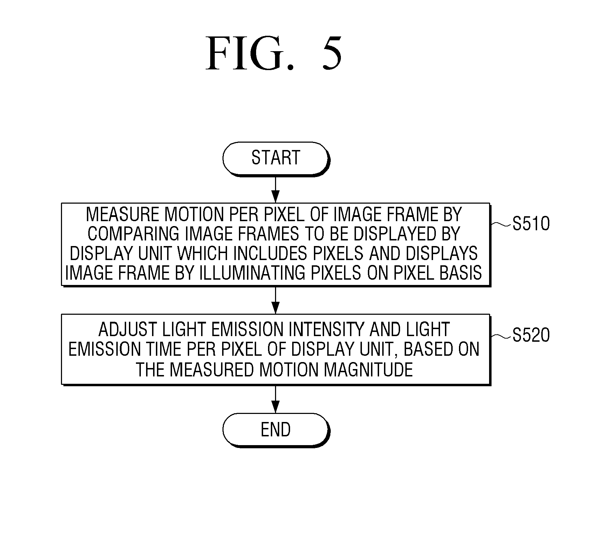

FIG. 5 is a flowchart of the display method according to an exemplary embodiment of the present general inventive concept.

The display method of FIG. 5 measures the motion per pixel in each image frame by comparing the plurality of the image frames to be displayed in the display unit (S510). Herein, the display unit includes the plurality of the pixels and displays the image frame by illuminating the pixels on the pixel basis.

Next, the display method adjusts the light emission intensity and the light emission time per pixel of the display unit, based on the measured motion magnitude (S520).

S520 for adjusting the light emission intensity and the light emission time per pixel of the display unit can divide the plurality of the pixels to the plurality of the groups based on the motion magnitude measured in S510, adjust the light emission intensity of the pixels of each group using the weight proportional to the motion magnitude of the corresponding group, and produce the light during the light emission time inversely proportional to the motion magnitude of the corresponding group.

More specifically, the display unit can generate and sequentially display the first, second and third field for each image frame. At this time, S520 for adjusting the light emission intensity and the light emission time per pixel of the display unit can divide the plurality of the pixels to the maximum motion group, the intermediate motion group, and the minimum motion group based on the motion magnitude.

In so doing, the light emission intensity of the pixels corresponding to the maximum motion group can be increased in the first field by applying the maximum weight and adjusted to zero in the second and third fields. The light emission intensity of the pixels corresponding to the intermediate motion group can be increased in the first and second fields by applying the intermediate weight and adjusted to 0 in the third fields. The light emission intensity of the pixels corresponding to the minimum motion group can maintain the original light emission intensity in the first, second, and third fields.

S520 for adjusting the light emission intensity and the light emission time per pixel of the display unit can divide the motion magnitude to the several levels based on at least one threshold and divide the display section of each image frame of the display unit to the plurality of the fields as many as the levels.

At this time, the light emission intensity of the pixels having the motion magnitude corresponding to each level can be adjusted using the weight corresponding to the motion magnitude of each level, and the light emission time of the pixels having the motion magnitude corresponding to each level can be adjusted with the number of the fields corresponding to the motion magnitude of each level.

S520 for adjusting the light emission intensity and the light emission time per pixel of the display unit can divide the plurality of the pixels to the maximum motion group, the intermediate motion group, and the minimum motion group based on the motion magnitude and divide the display section of each image frame of the display unit to the first, second, and third fields.

At this time, the pixels corresponding to the maximum motion group can adjust the light emission intensity by applying the maximum weight and adjust the light emission time to illuminate during the first field. The pixels corresponding to the intermediate motion group can adjust the light emission intensity by applying the intermediate weight and adjust the light emission time to illuminate during the first and second fields. The pixels corresponding to the minimum motion group can adjust the light emission time to illuminate during the first, second, and third fields without adjusting the light emission intensity.

Notably, the number of the motion groups divided based on the motion magnitude is not limited to three.

Thus, the sharpness of the video can be enhanced.

In the meantime, a program for executing the method according to various exemplary embodiments of the present general inventive concept can be stored to various recoding media.

Specifically, a code for executing the methods can be stored to various terminal-readable recording media including Random Access Memory (RAM), flash memory, Read Only Memory (ROM), Erasable Programmable ROM (EPROM), Electronically Erasable and Programmable ROM (EEPROM), register, hard disc, removable disc, memory card, USB memory, and CD-ROM.

Although a few embodiments of the present general inventive concept have been shown and described, it will be appreciated by those skilled in the art that changes may be made in these embodiments without departing from the principles of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a display unit comprising a plurality of pixels and displaying at least one image frame by illuminating the plurality of pixels on a pixel basis;
a motion measuring unit to measure a motion per pixel of the at least one image frame by comparing a plurality of image frames to be displayed on the display unit; and
a controller to adjust a light emission intensity and a light emission time per pixel of the display unit according to a magnitude of the measured motion.

2. The display apparatus of claim 1, wherein the controller divides the plurality of the pixels into a plurality of groups based on the measured motion magnitude, adjusts the light emission intensity of pixels of each group using a weight proportional to a motion magnitude of a corresponding group, and controls the display unit to illuminate the pixels of the corresponding group during the light emission time inversely proportional to the motion magnitude of the corresponding group.

3. The display apparatus of claim 2, wherein the display unit generates and sequentially displays first, second, and third fields corresponding to each image frame,
wherein the controller divides the plurality of the pixels into a maximum motion group, an intermediate motion group, and a minimum motion group based on the motion magnitude,
wherein the controller increases the light emission intensity of pixels corresponding to the maximum motion group in the first field by applying a maximum weight and adjusts the light emission intensity of the pixels corresponding to the maximum motion group to zero in the second and third fields,
wherein the controller increases the light emission intensity of pixels corresponding to the intermediate motion group in the first and second fields by applying an intermediate weight and adjusts the light emission intensity of the pixels corresponding to the intermediate motion group to zero in the third field, and
wherein the controller maintains an original light emission intensity of pixels corresponding to the minimum motion group in the first, second, and third fields.

4. The display apparatus of anyone of claims 2 to 3, wherein the controller divides the motion magnitude into a plurality of levels based on at least one threshold level, and divides a display section of each image frame of the display unit into a plurality of fields corresponding to the plurality of levels,
wherein the controller adjusts the light emission intensity of the pixels of the motion magnitude corresponding to each level using the weight corresponding to the motion magnitude of each level, and
wherein the controller adjusts the light emission time of the pixels of the motion magnitude corresponding to each level using the number of the fields corresponding to the motion magnitude of each level.

5. The display apparatus of anyone of claims 2 to 4, wherein the controller
divides the plurality of the pixels into a maximum motion group, an intermediate motion group, and a minimum motion group based on the motion magnitude,
divides a display section of each image frame of the display unit into first, second and third fields,
adjusts the light emission intensity of the plurality of pixels corresponding to the maximum motion group by applying a maximum weight and adjusts the light emission time to illuminate pixels of the first field,
adjusts the light emission intensity of the plurality of pixels corresponding to the intermediate motion group by applying an intermediate weight and adjusts the light emission time to illuminate pixels of the first and second fields, and
adjusts the light emission time of the plurality of pixels corresponding to the minimum motion group to illuminate pixels of the first, second, and third fields without adjusting the light emission intensity.

6. A display method comprising:
measuring motion per pixel of at least one image frame by comparing a plurality of image frames to be displayed on a display unit which comprises a plurality of pixels and displays an image frame by illuminating the pixels on a pixel basis; and
adjusting a light emission intensity and a light emission time per pixel of the display unit according to a magnitude of the measured motion.

7. The display method of claim 6, wherein the adjusting of the light emission intensity and the light emission time per pixel of the display unit comprises:
dividing the plurality of the pixels into a plurality of groups based on the measured motion magnitude,
adjusting the light emission intensity of the pixel of each group using a weight proportional to a motion magnitude of a corresponding group, and
producing light during the light emission time inversely proportional to the motion magnitude of the corresponding group.

8. The display method of claim 7, further comprising generating and sequentially displaying first, second, and third fields corresponding to each image frame,
wherein the adjusting of the light emission intensity and the light emission time per pixel of the display unit comprises:
dividing the plurality of the pixels into a maximum motion group, an intermediate motion group, and a minimum motion group based on the motion magnitude,
increasing the light emission intensity of pixels corresponding to the maximum motion group in the first field by applying a maximum weight and adjusting the light emission intensity of pixels corresponding to the maximum motion group to zero in the second and third fields,
increasing the light emission intensity of pixels corresponding to the intermediate motion group in the first and second fields by applying an intermediate weight and adjusting the light emission intensity of the pixels corresponding to the intermediate motion group to zero in the third field, and
maintaining an original light emission intensity of pixels corresponding to the minimum motion group in the first, second, and third fields.

9. The display method of anyone of claims 7 to 8, wherein the adjusting of the light emission intensity and the light emission time per pixel of the display unit comprises:
dividing the motion magnitude into a plurality of levels based on at least one threshold level,
dividing a display section of each image frame of the display unit into a plurality of fields corresponding to the plurality of levels,
adjusting the light emission intensity of the pixels of the motion magnitude corresponding to each level using the weight corresponding to the motion magnitude of each level, and
adjusting the light emission time of the pixels of the motion magnitude corresponding to each level using the fields corresponding to the motion magnitude of each level.

10. The display method of anyone of claims 7 to 9, wherein the adjusting the light emission intensity and the light emission time per pixel of the display unit comprises:
dividing the plurality of the pixels into a maximum motion group, an intermediate motion group, and a minimum motion group based on the motion magnitude,
dividing a display section of each image frame of the display unit into first, second and third fields,
adjusting the light emission intensity of the plurality of pixels corresponding to the maximum motion group by applying a maximum weight and adjusts the light emission time to illuminate pixels of the first field,
adjusting the light emission intensity of the plurality of pixels corresponding to the intermediate motion group by applying an intermediate weight and adjusting the light emission time to illuminate pixels of the first and second fields, and
adjusting the light emission time of the plurality of pixels corresponding to the minimum motion group to illuminate pixels of the first, second, and third fields without adjusting the light emission intensity.
